# EUROPEAN PATENT APPLICATION

(11) **EP 1 757 627 A1**
(43) Date of publication of application: **28.02.2007**
(21) Application number: 05730431.3
(22) Date of filing: 13.04.2005
(51) Int. Cl.: C08F 220/22, C09K 3/18, C08F 220/56

(54) **FLUORINE-CONTAINING POLYMER AND TREATING AGENT COMPOSITION**

(30) Priority: 15.04.2004 JP 2004119793; 01.12.2004 JP 2004348284
(71) Applicant: DAIKIN INDUSTRIES, LTD., Osaka-shi, Osaka 530-8323 (JP)
(72) Inventor: ISHIKAWA, Masahiko, Okayama 7011341 (JP); YAMAGUCHI, Fumihiko Y. Works of DAIKIN IND.LTD.,, Settsu-shi, Osaka 5668585 (JP)
(74) Representative: HOFFMANN EITLE
(86) International application number: PCT/JP2005/007146
(87) International publication number: WO 2005/100421

(57) **Abstract**

A fluorine-containing polymer which comprises (a) a fluorine-containing (meth)acrylate monomer and (b) a nitrogen-containing monomer represented by the general formula (I): 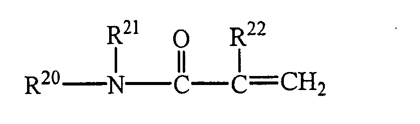 [wherein R²⁰ represents a hydrogen atom or a group containing a sulfonic acid group, R²¹ represents a hydrogen atom or an alkyl group having one to four carbon atoms, and R²² represents a hydrogen atom or a methyl group]; and a treating agent composition comprising said fluorine-containing polymer. The fluorine-containing polymer and the treating agent composition can be used for imparting satisfactory water repellency and oil resistance to a sheet of paper by the use of a reduced amount thereof.

## Description

### FIELD OF THE INVENTION

The present invention relates to a fluorine-containing polymer and a composition for treating a substrate (a solid substrate such as paper and masonry). The present invention relates also to a method of treating the substrate and the substrate to which the composition is adhered.

### BACKGROUND ARTS

Hitherto the following water- and oil-resistance processing agents for paper have been proposed:
(1) a processing agent which comprises a phosphate ester compound having a polyfluoroalkyl group (hereinafter referred as a Rf group) as an essential component (cf. JP-A-64-6196 and JP-A-3-123786), and
(2) a processing agent which comprises a copolymer of an acrylate having a Rf group, dimethylaminoalkyl methacrylate and vinyl acetate, as an essential component (cf. JP-A-7-206942).

The phosphate ester compound having a Rf group, contained in the processing agent (1), is a water-soluble compound, and therefore can not impart water repellency to paper. In addition, there is the problem that, when water having high hardness, which contains calcium, magnesium or the like, is used, an active component is precipitated so that the expected performance cannot be exhibited. As to the processing agent (2), there is the recognized problem that the processing agent should be used in a large amount in order to exhibit high oil resistance.
JP-A-7-34384 discloses a method of imparting water-and oil-repellency to paper, but a sufficient performance cannot be obtained.

Recent study results (EPA Report "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)) and the like clarify that a PFOA (perfluorooctanoic acid) doubtfully has a potential risk of environmental load. EPA (Environmental Protection Agency of USA) announced on April 14, 2003 that the EPA intensifies the scientific investigation on PFOA.
On the other hand, Federal Register (FR Vol. 68, No. 73/April 16, 2003 [FRL-2303-8]) (http://www.epa.gov/opptintr/pfoa/pfoafr.pdf), EPA Environmental News for release Monday April, 2003 "EPA INTENSIFIES SCIENTIFIC INVESTIGATION OF A CHEMICAL PROCESSING AID" (http://www.epa.gov/opptintr/pfoa/pfoaprs.pdf), and EPA OPPT FACT SHEET April 14, 2003 (http://www.epa.gov/opptintr/pfoa/pfoafacts.pdf) announced that a "telomer" may possibly metabolize or decompose to PFOA. It is also announced that the "telomer" is used in a large number of commercial products including fire fighting foams, care products and cleaning products as well as soil, stain and grease resistant coating on carpets, textiles, paper, and leather.

### DISCLOSURE OF THE INVENTION

### Problems to be Solved by the Invention

An object of the present invention is to provide a treatment composition which imparts sufficient water repellency and oil resistance to paper even in use of a small amount.
Another object of the present invention is to provide a fluorine-containing polymer which imparts high water- and oil-repellency and soil resistance to paper and masonry.

### Means for Solving the Problems

The present inventors discovered that the treatment of paper or masonry with a paper-treatment composition comprising a specified polymer exhibits high water repellency, oil resistance and an antifouling property (or soil resistance).

The present invention relates to a fluorine-containing polymer which has linear or branched fluoroalkyl group having 1 to 6 6 carbon atoms and which has an extrapolated glass transition-ending temperature (T_{eg}) of at least 25°C.
The present invention relates also to a fluorine-containing polymer which comprises:
(a) 55 to 99 parts by weight of at least one fluorine-containing (meth)acrylate monomer of the general formula: 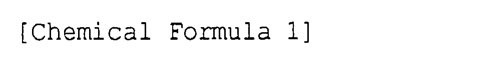 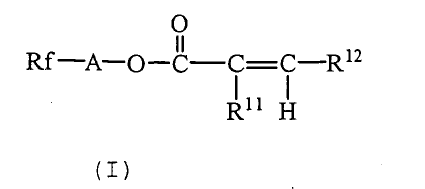 wherein Rf represents a linear or branched fluoroalkyl group having 1 to 6 carbon atoms,
   A represents a divalent organic group having a carbon atom to be bonded to an oxygen atom adjacent to the group A, and if needed, one or more oxygen atom, sulfur atom and/or nitrogen atom, and
   one of R¹¹ and R¹² represents a hydrogen atom, and the other thereof represents a hydrogen atom, an alkyl group having 1 to 4 carbon atoms, a halogen atom, a CFX¹X² group (wherein X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group; and
(b) 1 to 45 parts by weight of at least one nitrogen-containing monomer of the general formula: 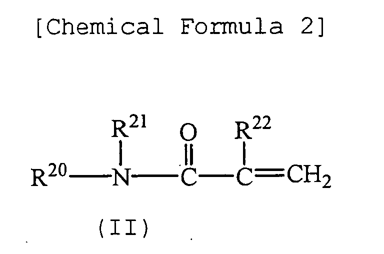
wherein R²⁰ is a hydrogen atom or a sulfonate group-containing group,
R²¹ is a hydrogen atom or an alkyl group having 1 to 4 carbon atoms, and
R²² is a hydrogen atom or a methyl group.

The present invention relates to a treatment composition comprising:
(1) said fluorine-containing polymer (particularly, fluorine-containing copolymer), and
(2) a liquid medium.
   Further, the present invention relates to a method of treating a solid substrate, which comprises treating the solid substrate with said treatment composition.

### EFFECT OF INVENTION

The treatment agent of the present invention can impart high water repellency, oil resistance and an antifouling property to the substrate (particularly, paper or masonry) even if used in a small amount. The oil resistance is frequently important to paper, and the treatment agent of the present invention can impart the excellent oil resistance to paper.

### BEST MODE OF CARRYING OUT THE INVENTION

The extrapolated glass transition-ending temperature (T_{eg}) is one of inflection points in a differential energy input-temperature curve (DSC curve) of the fluorine-containing polymer (cf. JIS K7121-1987). T_{eg} is at least 25°C, for example, at least 30°C, particularly 35°C, especially at least 40°C.
Herein, acrylate and methacrylate are generally called as (meth)acrylate. The general names such as (meth)acrylamide are in the same manner.

In the fluorine-containing (meth)acrylate monomer (a), the Rf group is a group in which at least two hydrogen atoms of an alkyl group are substituted with fluorine atoms. The Rf group may have a linear or branched chain structure. The Rf group has 1 to 6 carbon atoms, for example, 2 to 6 carbon atoms, particularly 4 carbon atoms. The ratio of fluorine atoms in the Rf group is preferably at least 60%, more preferably at least 80%, in particular, substantially 100%, when expressed by the equation: (the number of fluorine atoms in the Rf group)/(the number of hydrogen atoms in an alkyl group which has the same number of carbon atoms as that of the Rf group) X 100 (%). Hereinafter, a group which is formed by substituting all the hydrogen atoms in the alkyl group with fluorine atoms is called as a perfluoroalkyl group. The Rf group is preferably the perfluoroalkyl group.

Examples of the Rf group include -CF₃, -CF₂CF₃, - CF₂CF₂CF₃, -CF(CF₃)₂, -CF₂CF₂CF₂CF₃, -CF₂CF(CF₃)₂, -C(CF₃)₃, - (CF₂)₄CF₃, -(CF₂)₂CF(CF₃)₂, -CF₂C(CF₃)₃, -CF(CF₃)CF₂CF₂CF₃, - (CF₂)₅CF₃, and - (CF₂)₃CF(CF₃)₂.
R¹¹ or R¹² may be a halogen atom, and the preferable halogen atom is a fluorine atom, a chlorine atom, a bromine atom and a iodine atom.

The (meth)acrylate having a Rf group in the present invention is a compound having the Rf group in the ester residue of (meth)acrylate. One or at least two different (meth)acrylates having Rf groups may be used.

Examples of the fluorine-containing (meth)acrylate monomer (a) are the following compounds:
CH₂=CR'COOCH₂CH₂Rf,
CH₂=CR'COOCH₂CH₂N (CH₂CH₂CH₃) CORf,
CH₂=CR'COOCH(CH₃)CH₂Rf,
CH₂=CR'COOCH₂CH₂N(CH3)SO₂Rf,
CH₂=CR'COOCH₂CH₂N(CH₃)CORf,
CH₂=CR'COOCH₂CH₂N(CH₂CH₃)SO₂Rf,
CH₂=CR'COOCH₂CH₂N(CH₂CH₃)CORf,
CH₂=CR'COOCH₂CH₂N(CH₂CH₂CH₃)SO₂Rf,
CH₂=CR'COOCH(CH₂Cl)CH₂OCH₂CH₂N(CH₃)SO₂Rf.
In the above, R' is a hydrogen atom, an alkyl group having 1 to 4 carbon atoms, a halogen atom, a CFX¹X² group (wherein X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group (particularly, the hydrogen atom, the halogen atom or the methyl group); and Rf is the same in the above (that is, Rf represents a linear or branched fluoroalkyl group having 1 to 6 carbon atoms), particularly preferably a perfluoroalkyl group.

Specific examples of the fluorine-containing (meth)acrylate monomer (a) are as follows:
F(CF₂)₅CH₂OCOCR'=CH₂,
F(CF₂)₄CH₂CH₂OCOCR'=CH₂,
F(CF₂)₆CH₂CH₂OCOCR'=CH₂,
H(CF₂)₆CH₂OCOCR'=CH₂,
H(CF₂)₄CH₂OCOCR'=CH₂,
H(CF₂)₄CH₂CH₂OCOCR'=CH₂,
F(CF₂)₂CH₂CH₂OCOCR'=CH₂,
(CF₃)₂CFCH₂CH₂OCOCR'=CH₂,
(CF₃)₂CF(CF₂)₃CH₂CH₂OCOCR'=CH₂,

F(CF₂)₆SO₂N(C₃H₇)CH₂CH₂OCOCR'=CH₂,
F(CF₂)₆CON(C₃H₇)CH₂CH₂OCOCR'=CH₂,
F(CF₂)₆CH₂CH(CH₃)OCOCR'=CH₂ ,
F(CF₂)₆(CH₂)₄OCOCR'=CH₂ ,
F(CF₂)₆SO₂N(CH₃)CH₂CH₂OCOCR'=CH₂,
F(CF₂)₆CON(CH₃)CH₂CH₂OCOCR'=CH₂,
F(CF₂)₆SO₂N(C₂H₅)CH₂CH₂OCOCR'=CH₂,
F(CF₂)₆CON(C₂H₅)CH₂CH₂OCOCR'=CH₂,
F(CF₂)₆CONHCH₂CH₂OCOCR'=CH₂ ,
(CF₃)₂CF(CF₂)₃(CH₂)₃OCOCR'=CH₂ ,
(CF₃)₂CF(CF₂)₃CH₂CH(OCOCH₃)OCOCR'=CH₂,
(CF₃)₂CF(CF₂)₃CH₂CH(OH)CH₂OCOCR'=CH₂,
wherein R' is a hydrogen atom, a halogen atom or a methyl group.

Examples of nitrogen-containing monomer (b) are (b-1) a sulfonate group-containing monomer and (b-2) acrylamide.
Example of sulfonate group-containing monomer (b-1) is of the general formula: 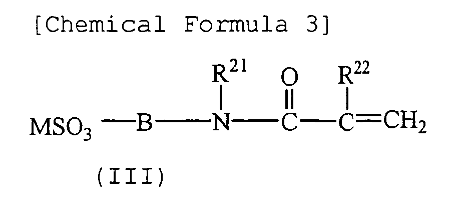 wherein B is a linear or branched alkylene group having 1 to 5 carbon atoms,
M is a hydrogen atom, a monovalent alkaline metal, or NR³⁰₄ [in which each of R³⁰ is a hydrogen atom, an alkyl group (having 1 to 10 carbon atoms) or a hydroxyalkyl group (having 1 to 10 carbon atoms)],
R²¹ is a hydrogen atom, or an alkyl group having 1 to 4 carbon atoms, and
R²² is a hydrogen atom or a methyl group.

In the sulfonate group-containing monomer (b-1), when M is the alkaline metal, examples of M include potassium, sodium are lithium. Examples of M which is the quaternary ammonium salt include N(CH₃)₄. Examples of B include propylene, butylene and pentene.

Specific examples of the sulfonate group-containing monomer (b-1) are 2-acrylamide-2-methylpropane sulfonic acid, 2-methacrylamide-2-ethylpropane sulfonic acid and 2-acrylamidebutane sulfonic acid. Preferable is 2-acrylamide-2-methylpropane sulfonic acid.

The fluorine-containing polymer may contain an other monomer (c) in addition to the monomers (a) and (b). Examples of the other monomer (c) include, for example, ethylene, vinyl acetate, vinyl halide (for example, vinyl chloride) vinylidene halide (for example, vinylidene chloride), acrylonitrile, styrene, benzyl (meth)acrylate, 2-hydroxyethyl (meth)acrylate, 2-hydroxypropyl (meth)acrylate, glycerol (meth)acrylate, polyethyleneglycol (meth)acrylate, polypropyleneglycol (meth)acrylate, methoxypolyethyleneglycol (meth)acrylate,
methoxypolypropyleneglycol (meth)acrylate, tetrahydrofurfuryl (meth)acrylate, 3-chloro-2-hydroxypropyl (meth)acrylate, vinyl alkyl ether, isoprene, chloroprene and butadiene. The other monomer (c) is not limited to these examples.
The weight-average molecular weight of the fluorine-containing polymer may be, for example, from 2,000 to 5,000,000, particularly from 3,000 to 5,000,000, especially from 10,000 to 1,000,000. The weight-average molecular weight of the fluorine-containing polymer can be measured by GPC (gel permeation chromatography) (in terms of polystyrene).

The amounts of the monomers may be as follows, in the fluorine-containing polymer (particularly, the fluorine-containing copolymer):
60 to 95 parts by weight, for example, 65 to 90 parts by weight, of the monomer (a),
5 to 40 parts by weight, particularly, 10 to 30 parts by weight, for example, 15 to 25 parts by weight, of the monomer (b), and
0 to 20 parts by weight, for example, 0.1 to 8 parts by weight, of the monomer (c).
The fluorine-containing polymer in the present invention can be prepared by any of conventional polymerization methods. Conditions for polymerization reaction can be arbitrarily selected. Such polymerization methods include a solution polymerization and an emulsion polymerization.

The polymerization may be conducted by using 0.1 to 2.0%, based on the weight of all the monomers, of at least one initiator. As the initiator, there may be used a peroxide such as benzoyl peroxide, lauroyl peroxide, succinyl peroxide or tert-butyl perpivalate; or an azo compound such as 2,2-azobisisobutylonitrile, 4,4-azobis(4-cyanopentanoic acid) or azodicarbonamide.
The polymerization step can be carried out at a temperature range from 40°C to the boiling point of the reaction mixture. The polymerization step is conducted preferably at the temperature between 60°C and 90°C.

An organic solvent is inert to the monomer(s) and dissolves the monomer(s), and examples thereof include acetone, chloroform, HCHC225, N,N-dimethylformamide, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane and hydrofluoroethers. The organic solvent may be used in the amount within the range from 50 to 2,000 parts by weight, for example, from 50 to 1,000 parts by weight, based on 100 parts by weight of total of the monomers.
The treatment agent of the present invention may be in the form of a solution, an emulsion or an aerosol. The treatment agent generally comprises the fluorine-containing polymer and a medium (for example, a liquid medium such as an organic solvent and/or water).
The fluorine-containing polymer of the present invention can be self-emulsified to form an emulsion (particularly, an aqueous emulsion), even if an emulsifier is absent, or the fluorine-containing polymer can be dissolved to form an aqueous solution. If necessary, the emulsion may contain an en emulsifier (The amount of the emulsifier is, for example 0.01 to 40 parts by weight, particularly 0.1 to 20 parts by weight, based on 100 parts by weight of the fluorine-containing polymer).
The concentration of the fluorine-containing polymer in the treatment agent may be, for example, from 0.01 to 50 % by weight.

The treatment agent of the present invention can be used for treating (for example, surface-treating) paper or masonry.
The treatment agent of the present invention can be applied to a substrate to be treated by a known method. Usually, the treatment agent is diluted or dispersed with an organic solvent or water, is adhered to surfaces of the substrate by a well-known procedure such as an immersion coating, a spray coating and a foam coating, and is dried (a surface treatment). Alternatively, when paper is manufactured, the treatment agent may be added to the pulp (an internal addition treatment). The fluorine-containing polymer may have the weight ratio of fluorine atom based on the paper, of 0.01 to 0.5% by weight, for example, 0.05 to 0.2% by weight in the case of the surface treatment, and may have the weight ratio of fluorine atom based on pulp, of 0.05 to 0.5% by weight, for example, 0.2 to 0.4% by weight in the case of the internal addition treatment.

The paper can be manufactured by conventional paper manufacturing methods. There can be used an internal addition method wherein the treatment agent is added to pulp slurry before manufacturing the paper, and an external addition method wherein the treatment agent is added to a manufactured paper can be used. Arbitrarily, the use of a heat treatment capable of having the temperature of at most 200°C depending on the properties of the substrate can exhibit excellent lipophobicity and hydrophobicity.
The present invention can be used for base paper for gypsum board, coating base paper, medium grade paper, ordinary liner and core, pure white neutral roll paper, neutral liner, rust-preventive liner, metal composite paper and kraft paper. The present invention can be used also for neutral printing or writing paper, neutral coating base paper, neutral PPC paper, neutral thermosensible paper, neutral pressure-sensitive paper, neutral ink jet paper, and neutral communication paper. Further, molded paper shaped by using a mold, particularly a molded container is included. A pulp-molded container can be made by the method described in, for example, JP-A-9-183429.

As a pulp raw material, there may be used any of bleached pulp or non-bleached chemical pulp such as kraft pulp or sulfite pulp, bleached or non-bleached high yield pulp such as chip pulp, mechanical pulp or thermomechanical pulp, and waste paper pulp of news paper, journals, corrugated board and ink-removed paper. Also, a mixture of the above pulp raw material with synthetic fibers such as asbestos, polyamide, polyimide, polyester, polyolefin or polyvinyl alcohol may be used.

The water resistance of paper can be improved by adding a sizing agent to the paper. Examples of the sizing agent are a cationic sizing agent, anionic sizing agent, and rosin-based sizing agent (e.g., acidic rosin-based sizing agent, or neutral rosin-based sizing agent). A styrene-acrylic acid copolymer and an alkylketene dimer are preferred. The amount of the sizing agent may be 0.01 to 5 % by weight based on the weight of the pulp.

If needed, the paper may contain additives conventionally used in papermaking, for example, a paper strength-enhancing agent such as starch, modified starch, carboxyl methyl cellulose or polyamide-polyamine-epichlorohydrin resin, a yield-improving agent, a dye, a fluorescent dye, a slime-controlling agent, and a defoaming agent.
If needed, a size press, gate roll coater, bill blade coater, calender or the like may be used to apply the chemicals (e.g., starch, polyvinyl alcohol, dye, coating color, or slide-preventive agent) to paper.

The substrate may be masonry such as stone. Examples of the masonry include stone, brick, concrete and tile. Examples of stone include natural stone (for example, marble and granite), and artificial stone.
The masonry is treated by applying the treatment agent to the substrate. The treatment agent may be coated in the amount of 20 to 1000 g/m², preferably 50 to 500 g/m². The coating may be conducted once or a plurality of times. The coating method may be any of brushing, spraying, rolling, dipping, using rags containing the treatment agent, or the like. Excess treatment agent may be wiped off according to the necessity. Then the treatment agent is dried. The drying may be conducted at room temperature, and/or the baking may be conducted at 80 °C to 250 °C. The fluorine-containing polymer may form a film of 0.01 to 100 g/m² on the masonry.
Examples of the treated substrate include a textile, a filter (for example, an electrostatic filter), a dust protective mask, a part of fuel cell (for example, a gaseous diffusion electrode and a gaseous diffusion support), glass, paper, wood, leather, fur, asbestos, brick, cement, metal and oxide, ceramics, plastics, a coated surface and a plaster.
In the present invention, the "treatment" means that a treatment agent is applied to a substrate by immersion, spraying, coating or the like. The treatment gives the result that a fluorine-containing polymer which is an active component of the treatment agent is penetrated into the internal parts of the substrate and/or adhered to surfaces of the substrate.

### PREFERRED EMBODIMENTS OF THE INVENTION

Hereinafter, the present invention will be described in more detail by way of Examples which are illustrative only, and should not be construed as limiting the scope of the present invention in any way. Throughout Examples, "parts" and "%" are "parts by weight" and "% by weight", unless otherwise specified.

The testing methods used are as follows.

### Oil resistance

The oil resistance of paper is measured according to a procedure extending TAPPI UM-557. One drop of each of test oils indicated in Table 1 is placed on paper, and the penetration state of the oil into the paper is observed 15 seconds later. The maximum of the oil resistance degrees of a test oil which does not penetrate paper is taken as oil resistance.

**Table 1**

| Oil resistance degree | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |
| 13 | 0 | 35 | 65 |
| 14 | 0 | 25 | 75 |
| 15 | 0 | 15 | 85 |
| 16 | 0 | 0 | 100 |

As HCFC225, used was AK-225 manufactured by Asahi Glass Co., Ltd.
DMF represents dimethyl formamide, AMPS represents 2-acrylamide-2-methylpropane sulfonic acid, DM represents dimethylaminoethyl methacrylate, AAm represents acrylamide, and VAc represents vinyl acetate.

Base paper for the coating of the polymer solution was prepared by the following procedure.
A polyamide-polyamine-epichlorohydrin reaction product (WS-570 manufactured by Nippon PMC) (2 g) having a solid content of 1% was added in portions to a 1% aqueous dispersion (500 g) of a mixture of a bleached kraft pulp of broad-leaved trees and a bleached kraft pulp of needle-leaved trees under stirring. The stirring was continued for 2 minutes. The resultant pulp slurry was made into paper with a standard papermaking system described in JIS P8209. The resultant wet paper was pressed between filter paper sheets under a pressure of 3.5 kg/cm² so as to sufficiently absorb water contained in the paper. The paper was dried over a drum drier (100°C X 2 minutes) to obtain base paper having a basis weight of 80 g/cm².

### Synthesis Example 1

22.6 parts of AK-225, 22.6 parts of DMF, 2.79 parts of AMPS and 8.4 parts of a fluorine-containing acrylate (V) of the formula: 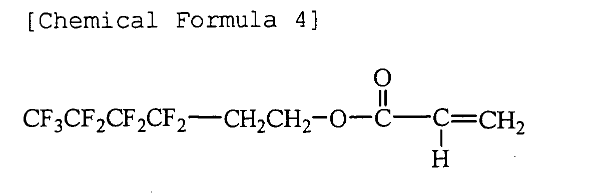 were charged in a 100 parts volume (1 L) reaction vessel equipped with a stirrer, a thermometer, a reflux condenser, a dropping funnel, a nitrogen inlet and a heater.
The mixture was subjected to a nitrogen stream and was heated to 60°C. 0.16 Parts of a 70 % solution of tertiary butyl peroxypivalate was added and the reaction was conducted for 6 hours. A consumption coefficient of the fluorine-containing acrylate (V) according to a gas chromatography was 100%.
The reaction mixture was cooled to room temperature. 56 Parts of a transparent solution (S1) was obtained, which had a solid content of 19.8%.

### Synthesis Example 2

The same procedure as in Synthesis Example 1 was repeated except that 8.4 parts of the fluorine-containing acrylate (V) was replaced by 8.4 parts of a fluorine-containing acrylate (VI) of the following formula: 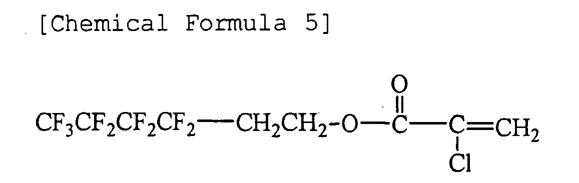 A consumption coefficient of the fluorine-containing acrylate (VI) according to a gas chromatography was 100%. 56 Parts of a transparent amber solution (S2) was obtained, which had a solid content of 20.0%.

### Synthesis Example 3

The same procedure as in Synthesis Example 2 was repeated except that the amount of the fluorine-containing acrylate (VI) was changed to 7.2 parts and the amount of AMPS was changed to 4 parts.
A consumption coefficient of the fluorine-containing acrylate (VI) according to a gas chromatography was 100%. 56 Parts of a transparent amber solution (S3) was obtained, which had a solid content of 20.0%.

### Synthesis Example 4

The same procedure as in Synthesis Example 1 was repeated except that 2.79 parts of AMPS was replaced by 0.8 parts of acrylamide (AAm) and the amount of the fluorine-containing acrylate (V) was changed to 10.4 parts.
A consumption coefficient of the fluorine-containing acrylate (V) according to a gas chromatography was 100%. 56 Parts of a transparent amber solution (S4) was obtained, which had a solid content of 19.9%.

### Synthesis Example 5

The same procedure as in Synthesis Example 4 was repeated except that the amount of acrylamide was changed to 1.8 parts and the amount of the fluorine-containing acrylate (V) was changed to 9.4 parts.
A consumption coefficient of the fluorine-containing acrylate (V) according to a gas chromatography was 100%. 56 Parts of a transparent amber solution (S5) was obtained, which had a solid content of 20.0%.

### Synthesis Example 6

22.6 parts of AK-225, 22.6 parts of DMF, 2.23 parts of DM, 0.56 parts of vinyl acetate (VAc) and 8.4 parts of the fluorine-containing acrylate (V) were charged in a 100 parts volume reaction vessel equipped with a stirrer, a thermometer, a reflux condenser, a dropping funnel, a nitrogen inlet and a heater.
The mixture was subjected to a nitrogen stream and was heated to 60°C. 0.16 Parts of a 70 % solution of tertiary butyl peroxypivalate was added and the reaction was conducted for 6 hours. Consumption coefficients of the fluorine-containing acrylate (V) and DM according to a gas chromatography were 100%.
The reaction mixture was cooled to room temperature. 56 Parts of a transparent solution (S6) was obtained, which had a solid content of 19.5%.

### Synthesis Example 7

The same procedure as in Synthesis Example 6 was repeated except that 8.4 parts of the fluorine-containing acrylate (V) was replaced by 8.4 parts of a fluorine-containing acrylate (VI).
An obtained solution (S7) had a solid content of 19.5%. Consumption coefficients of the fluorine-containing acrylate (VI) and DM according to a gas chromatography were 100%.

### Synthesis Example 8

The same procedure as in Synthesis Example 6 was repeated except that the amount of the fluorine-containing acrylate (VI) was changed to 7.2 parts and the amount of DM was changed to 3.43 parts.
Consumption coefficients of the fluorine-containing acrylate (VI) and DM according to a gas chromatography were 100%. 56 Parts of a transparent amber solution (S8) was obtained, which had a solid content of 19.5%.

### Example 1

The solution S1 was diluted with HCFC225 to give a desired solid concentration. Base paper was immersed in the diluted solution, squeezed at a squeeze pressure of 1.0kg/m² by a squeezing machine and dried at room temperature for 30 minutes. Then, the paper was heat-treated at 115°C for 1 minute by a drum dryer. The oil resistance of the resultant paper was evaluated. Results are shown in Table 2.
In addition, the extrapolated glass transition-ending temperature (T_{eg}) of the polymer was measured at a temperature increase speed of 20°C/min by a differential scanning calorimeter (DSC-50 manufactured by Shimadzu Corp.).

### Examples 2 to 5

The same procedure as in Example 1 was repeated except that the solution S1 was changed to S2 (Example 2), S3 (Example 3), S4 (Example 4) or S5 (Example 5). Results are shown in Table 2.

### Comparative Examples 1 to 3

The same procedure as in Example 1 was repeated except that the solution S1 was changed to S6 (Comparative Example 1), S7 (Comparative Example 2) or S8 (Comparative Example 3). Results are shown in Table 2.

**[Table 1]**

| | Test liquid | Monomer ratio | Extrapolated glass transition-ending temperature Teg (°C) | Solid concentration in coating liquid [%] | Oil resistance [kit] |
|---|---|---|---|---|---|
| Ex. 1 | S1 | (V)/AMPS 75/25 | 40 | 0.075 | 9 |
| | | | | 0.150 | 11 |
| | | | | 0.225 | 14 |
| Ex. 2 | S2 | (VI)/AMPS 75/25 | 68 | 0.075 | 7 |
| | | | | 0.150 | 10 |
| | | | | 0.225 | 15 |
| Ex. 3 | S3 | (VI)/AMPS 65/35 | 71 | 0.075 | 7 |
| | | | | 0.150 | 11 |
| | | | | 0.225 | 14 |
| Ex. 4 | S4 | (V)/AAm 93/7 | 44 | 0.075 | 10 |
| | | | | 0.150 | 11 |
| | | | | 0.225 | 14 |
| Ex. 5 | S5 | (V)/AAm 84/16 | 61 | 0.075 | 9 |
| | | | | 0.150 | 10 |
| | | | | 0.225 | 13 |
| Com. Ex. 1 | S6 | (V)/DM/VAc 75/20/5 | <25 | 0.075 | 5 |
| | | | | 0.150 | 6 |
| | | | | 0.225 | 7 |
| Com. Ex. 2 | S7 | (VI)/DM/VAc 75/20/5 | <25 | 0.075 | 7 |
| | | | | 0.150 | 9 |
| | | | | 0.225 | 10 |
| Com. Ex. 3 | S8 | (VI)/DM/VAc 65/30/5 | <25 | 0.075 | 5 |
| | | | | 0.150 | 6 |
| | | | | 0.225 | 7 |

Preferred embodiments of the present invention are as follows:
A. a fluorine-containing polymer which comprises:
   (a) 55 to 99 parts by weight of at least one fluorine-containing (meth)acrylate monomer of the general formula: 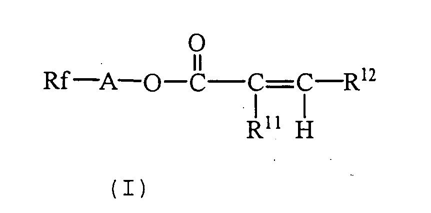 wherein Rf represents a linear or branched fluoroalkyl group having 1 to 6 carbon atoms,
      A represents a divalent organic group having a carbon atom to be bonded to an oxygen atom adjacent to the group A, and if needed, one or more oxygen atom, sulfur atom and/or nitrogen atom, and
      one of R¹¹ and R¹² represents a hydrogen atom, and the other thereof represents a hydrogen atom, an alkyl group having 1 to 4 carbon atoms, a halogen atom, a CFX¹X² group (wherein X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group; and
   (b) 1 to 45 parts by weight of at least one sulfonate group-containing monomer of the general formula: 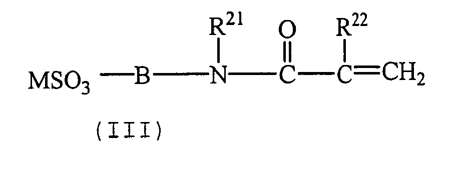
   wherein B is a linear or branched alkylene group having 1 to 5 carbon atoms,
   M is a hydrogen atom, a monovalent alkaline metal, or NR³⁰₄ [in which each of R³⁰ is a hydrogen atom, an alkyl group (having 1 to 10 carbon atoms) or a hydroxyalkyl group (having 1 to 10 carbon atoms)],
   R²¹ is a hydrogen atom, or an alkyl group having 1 to 4 carbon atoms, and
   R²² is a hydrogen atom or a methyl group.
B. The fluorine-containing polymer according to item A,
   wherein the Rf group in the fluorine-containing (meth)acrylate monomer (a) has 4 or 6 carbon atoms or a mixture thereof.
C. The fluorine-containing polymer according to item A,
   wherein the nitrogen-containing monomer (b) is 2-acrylamide-2-methylpropane sulfonic acid.
D. The fluorine-containing polymer according to item A,
   wherein the amount of the nitrogen-containing monomer (b) is from 10 to 30 parts by weight.
E. A treatment composition comprising:
   (1) the fluorine-containing polymer according to item A, and
   (2) a liquid medium.
F. The treatment composition according to item E,
   wherein the liquid medium (2) is an organic solvent or water.
G. The treatment composition according to item E, which is an agent for treating paper.
H. A method of treating a solid substrate, which comprises treating the solid substrate with the treatment composition according to item E.
I. The treatment method according to item H, wherein the substrate is paper or masonry.
J. A substrate treated with the treatment method according to item H.
K. Use of the polymer according item A, in lipophobicity or hydrophobicity treatment of a solid substrate, particularly paper and cardboard.

## Claims

1. A fluorine-containing polymer which has linear or branched fluoroalkyl group having 1 to 6 carbon atoms and which has an extrapolated glass transition-ending temperature (T_{eg}) of at least 25°C.

2. The fluorine-containing polymer which comprises:
(a) 55 to 99 parts by weight of at least one fluorine-containing (meth)acrylate monomer of the general formula: 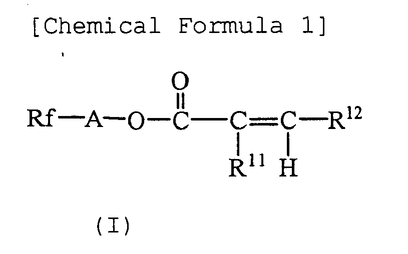 wherein Rf represents a linear or branched fluoroalkyl group having 1 to 6 carbon atoms,
A represents a divalent organic group having a carbon atom to be bonded to an oxygen atom adjacent to the group A, and
if needed, one or more oxygen atom, sulfur atom and/or nitrogen atom, and
one of R¹¹ and R¹² represents a hydrogen atom, and the other thereof represents a hydrogen atom, an alkyl group having 1 to 4 carbon atoms, a halogen atom, a CFX¹X² group (wherein X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group; and
(b) 1 to 45 parts by weight of at least one nitrogen-containing monomer of the general formula: 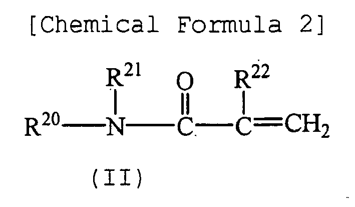
wherein R²⁰ is a hydrogen atom or a sulfonate group-containing group,
R²¹ is a hydrogen atom or an alkyl group having 1 to 4 carbon atoms, and
R²² is a hydrogen atom or a methyl group.

3. The fluorine-containing polymer according to claim 2, wherein the nitrogen-containing monomer (b) is:
(b-1) a sulfonate group-containing monomer of the general formula: 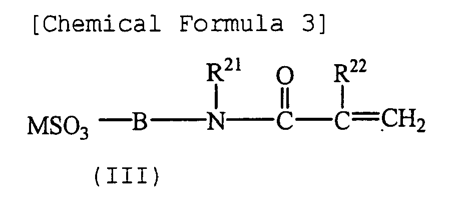 wherein B is a linear or branched alkylene group having 1 to 5 carbon atoms,
M is a hydrogen atom, a monovalent alkaline metal, or NR³⁰₄ [in which each of R³⁰ is a hydrogen atom, an alkyl group (having 1 to 10 carbon atoms) or a hydroxyalkyl group (having 1 to 10 carbon atoms)],
R²¹ is a hydrogen atom, or an alkyl group having 1 to 4 carbon atoms, and
R²² is a hydrogen atom or a methyl group, or
(b-2) acrylamide.

4. The fluorine-containing polymer according to claim 2, wherein the Rf group in the fluorine-containing (meth)acrylate monomer (a) has 4 or 6 carbon atoms or a mixture thereof.

5. The fluorine-containing polymer according to claim 2, wherein the nitrogen-containing monomer (b) is 2-acrylamide-2-methylpropane sulfonic acid.

6. The fluorine-containing polymer according to claim 2, wherein the amount of the nitrogen-containing monomer (b) is from 10 to 30 parts by weight.

7. A treatment composition comprising:
(1) the fluorine-containing polymer according to claim 1 or 2, and
(2) a liquid medium.

8. The treatment composition according to claim 7, wherein the liquid medium (2) is an organic solvent or water.

9. The treatment composition according to claim 7, which is an agent for treating paper.

10. A method of treating a solid substrate, which comprises treating the solid substrate with the treatment composition according to claim 7.

11. The treatment method according to claim 10, wherein the substrate is paper or masonry.

12. A substrate treated with the treatment method according to claim 10.

13. Use of the polymer according anyone of claims 1 to 6 in lipophobicity or hydrophobicity treatment of a solid substrate, particularly paper and cardboard.
